# EUROPEAN PATENT SPECIFICATION

(11) **EP 1 652 622 B1**
(45) Date of publication and mention of the grant of the patent: **27.12.2006**
(21) Application number: 04425808.5
(22) Date of filing: 28.10.2004
(51) Int. Cl.: B25B 27/00

(54) **Elastic ring fitting device**
Vorrichtung zum Einsetzen eines elastischen Rings
Dispositif pour l'insertion d'une bague élastique

(43) Date of publication of application: 03.05.2006
(73) Proprietor: COMAU S.p.A., 10095 Grugliasco (Torino) (IT)
(72) Inventor: Rainbow, Brian, Luton Bedfordshire LU2 0HR (GB); Coady, James, Luton Bedfordshire LU2 0HR (GB); Driscoll, Philip, Luton Bedfordshire LU2 0HR (GB)
(74) Representative: Notaro, Giancarlo

(56) References cited:
- DE-C1- 4 100 045
- US-A- 4 203 191
- US-A- 4 719 684

## Description

The present invention relates to a device for fitting an elastic ring within a circumferential groove provided in the surface of the inner cavity of a hollow article, of the type comprising:
a support for the hollow article,
a guiding element for mounting on said hollow article once it is placed on said support, said guiding element having an inner guiding surface tapering towards the inner cavity of said article in the above mentioned mounted condition of the guiding element and said article on said support,
a ring inserting tool axially slidably mounted through said inner guiding surface towards said article to push an elastic ring previously arranged within said guiding surface towards a receiving groove on the surface of the inner cavity of said article,
wherein said ring inserting tool comprises a tubular body with a number of axial slots extending from a forward end of said body to define a circumferential array of axial deflectable blades.

A device of this type is disclosed in DE 41 00 045 C1.

In the practical use of devices of this type various difficulties are encountered especially with respect to the problem of ensuring proper fitting of the elastic ring within the receiving groove on the inner surface of the hollow article. The devices which have been used heretofore present a high rate of unacceptable products, which results in high losses in time and productivity.

In order to avoid these drawbacks, the present invention is directed to a device having all the features which have been indicated in the foregoing, and further characterized in that it also comprises a plunger axially slidable within a cylindrical cavity of said support and having a forward end facing the inner cavity of the article from the side opposite to that of the ring inserting tool, said device further comprising spring means biassing said plunger to a rest position towards said article in which the forward end of the plunger projects into the inner cavity of the article, so that said plunger tends to oppose the movement of the elastic ring caused by the ring inserting tool during the tool inserting stroke, and returns the elastic ring to its proper position if it goes past the respective groove during said tool inserting stroke.

According to a further preferred feature, the blades of the inserting tool are provided with outer projections defining a front circumferential abutment surface for pushing the elastic ring into position within said groove.

Further preferred features of the invention are indicated in the annexed claims.

The invention will be now described with reference to a preferred embodiment, as shown in the annexed drawings, given purely by way of non limiting example, in which:

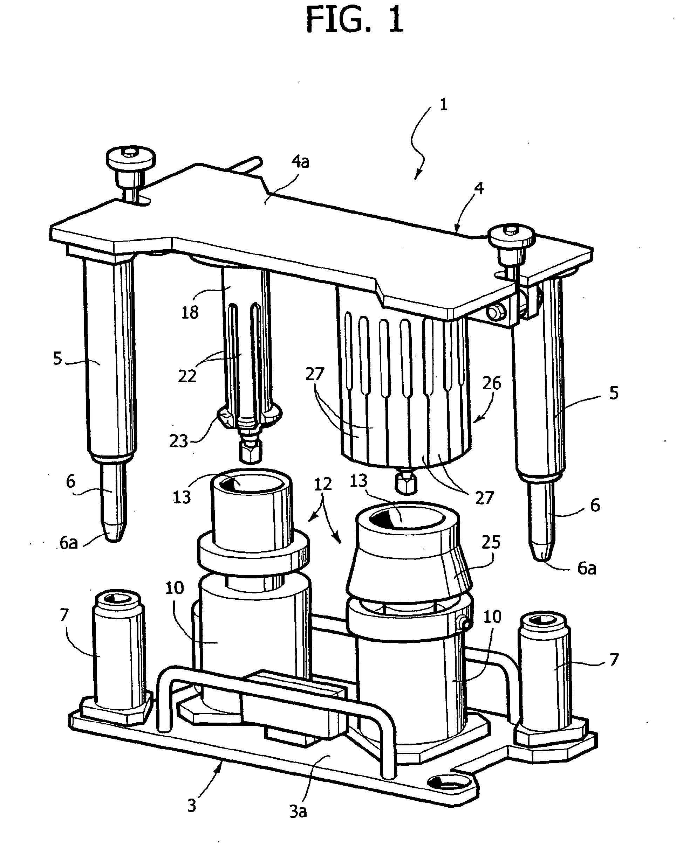

figure 1 is a perspective view of an apparatus according to the invention,

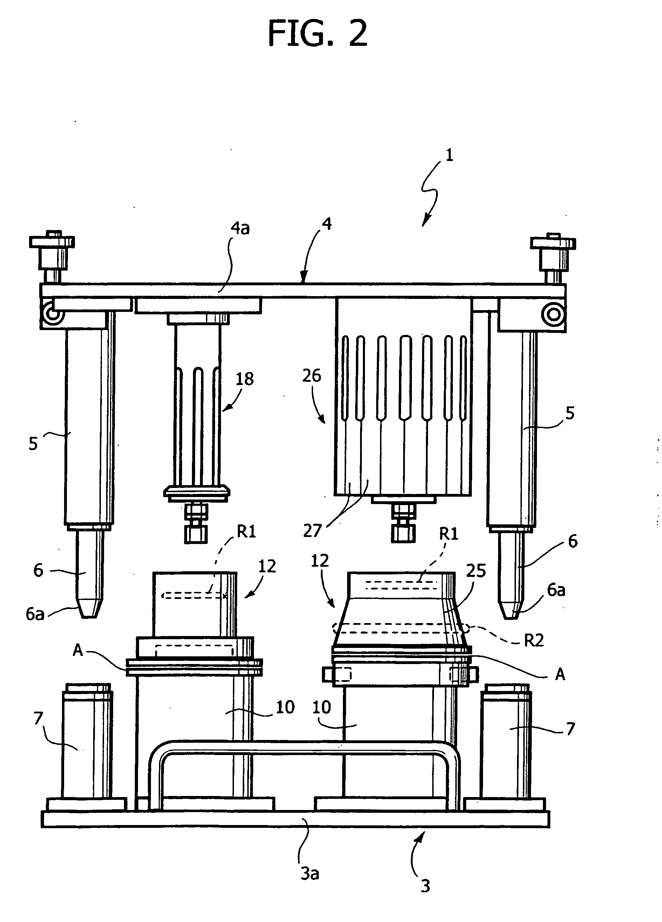

figure 2 is a an elevational view of the apparatus of figure 1,
figure 3 is a cross-sectional view in a vertical plane of the apparatus of figures 1, 2,
figure 4 is a view at an enlarged scale of a detail of figure 3,
figure 5 is a perspective view at an enlarged scale of the ring inserting tool, and
figure 6 is a perspective view of one exemplary article to which the apparatus can be applied.

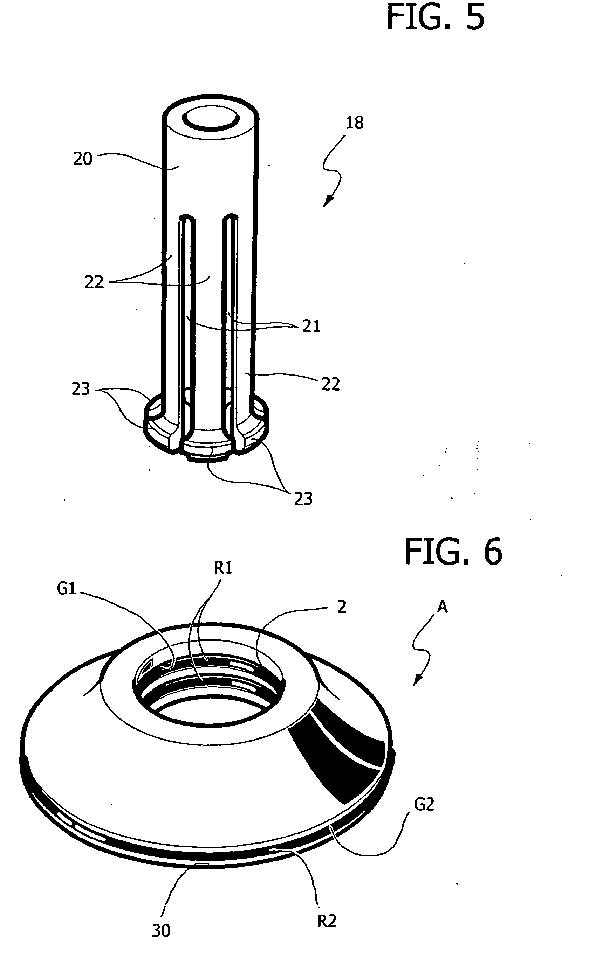

In the drawings, reference numeral 1 generally designates an apparatus for inserting inner O-rings R1 (figure 6) and an outer O-ring R2 on the inner and outer surfaces of annular articles such as that designated by A in figure 6.

In the specific illustrated example, article A has an inner cavity 2 whose surface has two circumferential grooves G1 which are for receiving two O-rings R1. The outer surface 30 of article A has a circumferential groove G2 which is for receiving an elastic ring R2.

In the preferred embodiment which is shown herein, the apparatus 1 comprises two devices 8, 9. Device 8 is for inserting one inner ring R1 into the inner cavity 2 of article A. Device 9 receives article A in an upturned position with respect to that in device 8 and is able to insert simultaneously the second inner ring R1 and an outer ring R2.

The apparatus 1 comprises a fixed lower structure 3 and an upper vertically movable structure 4 which are designed to be installed along a production line. A reciprocating vertical movement of the upper structure 4 is imparted by means (not shown) of any known type, such as by a fluid cylinder.

The upper structure 4 of apparatus 1 comprises a table 4a from which there project downwardly two vertical cylindrical columns 5 extending into vertical coaxial pins 6 with conical ends 6a. The pins 6 are for being received within vertical bushes 7 projecting upwardly from a table 3a forming part of the fixed structure 3.

In the following, the structure and operation of the device 8 for inserting one inner ring R1 within an article A will be illustrated.

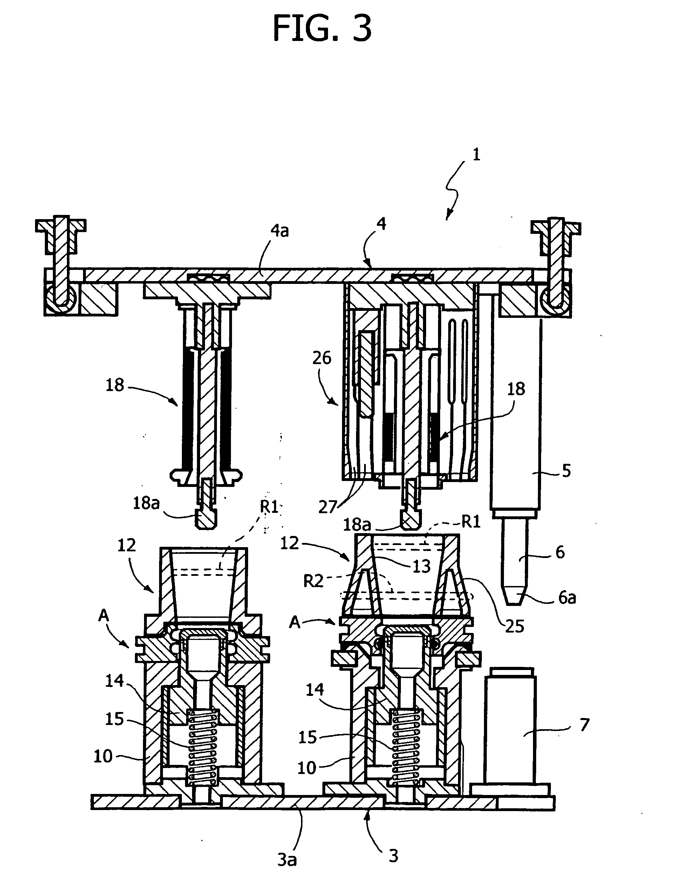

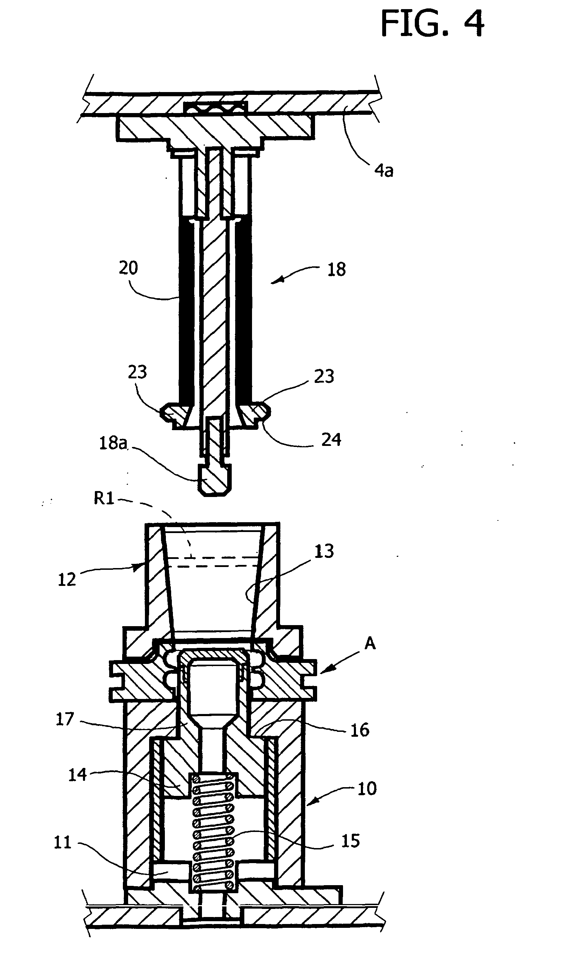

Device 8 comprises a support 10 having a cylindrical body (figures 3, 4) with an inner cavity 11.

A guiding element 12 is placed above the article A once the latter has been placed on top of the support 10, coaxially with a cylindrical body of support 10 and the inner cylindrical cavity 11. The guiding element 12 has a tubular body with an inner conical guiding surface 13 tapering downwardly, i.e. in the direction of the end of guiding element 12 closer to article A. An inner ring R1 is previously arranged within the inner cavity of guiding element 12 with the plane of the ring substantially orthogonal to the axis of guiding element 12.

A plunger 14 is axially slidably mounted within the inner cylindrical cavity 11 of support 10 and is biased by a helical spring 15 to an upward rest position in which a circumferential abutment surface 16 of plunger 14 is in contact with a shoulder defined by the surface of the inner cavity 11. In this rest position, the upper end 17 of plunger 14 projects partially within the inner cavity of article A.

Reference numeral 18 designates the ring inserting tool, having a cylindrical tubular body 20 (figure 5) with a plurality of axial slots 21 extending from the lower end of the body 20 so as to define a circumferential array of deflectable blades 22. Blades 22 are provided, at a position close to their lower ends, with projections 23 extending radially outwardly which define a circumferential front abutment surface 24 which is to engage the elastic ring R1 in order to push it through the guiding surface 13 down to the position where it snaps within the groove G1 in the surface of the inner cavity of article A.

As indicated above, the inserting tool 18, which has an inner stem 18a, is pushed downwardly by any known means so as to push the elastic ring R1 by the abutments surface 24 at the lower ends of the deflectable blades 22 until it engages the inner groove G1 in article A. During this movement, the plunger 14 is pushed downwardly by the ring R1 and therefore tends to oppose the downward movement of the inserting tool. The plunger 14 and spring 15 are arranged and dimensioned so that they do not prevent the proper fitting of the elastic ring R1 into groove G1, while they are able to return the elastic ring upwardly into its proper position within the groove G1 if during the tool inserting stroke the elastic ring R1 goes past the groove G1.

As indicated above, device 8 is used to insert one elastic ring R1 into one of inner grooves G1 of article A, which is closer to the end of article A which is in the uppermost position within device 8.

In order to fit a second inner ring R1 and an outer ring R2 on the same article A, this article will be placed into device 9 in an upturned position, so that the inner groove G1 which is still to receive a respective inner ring is placed in an upper position relative to the ring R1 which has been already inserted.

Device 9 has partially the same structure and operation as device 8. For this reason, all the elements of device 9 which correspond to similar elements of device 8 are designated by the same reference numerals. The difference with respect to device 8 lies in that the guiding element 12 is provided both with an inner guiding conical surface 13 as that described above, and with an outer conical surface 25 tapering upwardly, which has one end of larger diameter on the side closer to article A. An outer ring R2 is previously arranged on this outer conical surface 25. Moreover, the ring inserting tool 26 comprises a second outer coaxial tubular body 27 with a number of slots defining a circumferential array of axial blades 27 which are for engaging the outer ring R2 on the outer guiding surface 25 so as to push ring R2 into position within groove G2 on the outer surface 2 of the article A as a result of a downward inserting stroke of the inserting tool. Therefore, as it is clearly understood, in the case of device 9, the tool 18 and tool 26 operate simultaneously to insert one inner ring R1 and one outer ring R2 into respective inner and outer grooves G1 and G2.

Naturally, while the principle of the invention remains the same, the details of construction and the embodiments may widely vary with respect to what has been described with reference to the drawings, without departing from the scope of the present invention as defined in the appended claims.

## Claims

1. A device (1) for fitting an elastic ring within a circumferential groove (G1) in the surface of the inner cavity (2) of a hollow article (A), comprising:
a support (10) for said hollow article (A),
a guiding element (12) for mounting on said hollow article (A), once this article has been placed on said support (10), said guiding element (12) having an inner guiding surface (13) tapering towards the inner cavity (2) of said article (A) in the above mentioned mounted condition of said guiding element (12) and said article (A) on said support (10),
a ring inserting tool (18) axially slidably mounted through said inner guiding surface (13) towards said article (A) to push an elastic ring (R₁, R₂) previously arranged within said guiding surface (13) towards a receiving groove (G1) in the surface of the inner cavity of said article (A),
wherein said ring inserting tool (18) comprises a tubular body (20) with a number of axial slots (21) extending from a forward end of said body (20) to define a circumferential array of axial deflectable blades (22),
**characterized in that** said device for filling an elastic ring further comprises a plunger (14) axially slidably mounted within a cylindrical cavity (11) of said support (10) and having a forward end (17) facing the inner cavity (2) of the article (A) from the side opposite to that of the ring inserting tool (18), and
spring means for biasing said plunger (14) to a rest position towards said article (A), said forward end (17) of the plunger (14) projecting within the inner cavity of said article (A) in the above mentioned rest position so that said plunger (14) tends to oppose the movement of said elastic ring (R1) caused by said ring inserting tool (18) during the tool inserting stroke and returns the elastic ring (R1) to its proper position in case it goes past the respective groove (G1) during said tool inserting stroke.

2. Device according to claim 1, **characterized in that** said deflectable blades (22) are provided with outer projections (23) defining a front circumferential abutment surface (24) for pushing said elastic ring (R1) axially in position within said groove (G1).

3. Device according to claim 1, **characterized in that** it is designed for fitting simultaneously an inner elastic ring (R1) on the inner cavity (2) of an article (A) and an outer elastic ring (R2) in a groove (G2) on the outer surface (3) of said article (A), **in that** said guiding element (10) is provided also with an outer conical surface (25) having one end of larger diameter close to said article, and **in that** said ring inserting tool (18) is provided with an outer coaxial tubular body (26) having a number of axial slots defining a circumferential array of deflectable blades (27) for engagement on an outer ring (R2) previously arranged on said outer conical surface (25) of said guiding element (12).

## Patentansprüche

1. Eine Vorrichtung (1) zum Einsetzen eines elastischen Rings in eine Umfangsnut (G1) in der Oberfläche des inneren Hohlraums (2) eines hohlen Artikels (A), umfassend:
einen Halter (10) für den hohlen Artikel (A),
ein Führungselement (12), um auf dem hohlen Artikel (A) angebracht zu werden, sobald dieser Artikel auf dem Halter (10) angeordnet worden ist, wobei dieses Führungselement (12) eine innere Führungsfläche (13) aufweist, die sich in Richtung des inneren Hohlraums (2) des Artikels (A) in dem oben genannten angebrachten Zustand des Führungselementes (12) und des Artikels (A) auf dem Halter (10) verjüngt,
ein Ringeinsetzwerkzeug (18), das axial durch die innere Führungsfläche (13) in Richtung des Artikels (A) verschiebbar angebracht ist, um einen elastischen Ring (R1, R2), der zuvor innerhalb der Führungsfläche (13) angeordnet wurde, in Richtung einer aufnehmenden Nuten (G1) in der Oberfläche des inneren Hohlraums des Artikels (A) zu drücken,
wobei das Ringeinsetzwerkzeug (18) einen röhrenförmigen Körper (20) mit einer Anzahl von axialen Schlitzen (21), die sich von einem vorderen Ende des Körpers (20) weg erstrecken, um eine umlaufende Anordnung von axialen, verformbaren Lamellen (22) zu bilden, aufweist,
**dadurch gekennzeichnet, dass** die Vorrichtung (1) zum Einsetzen eines elastischen Rings weiterhin einen innerhalb eines zylindrischen Hohlraums (11) des Halters (10) axial beweglich angebrachten Stempel (14), der ein vorderes Ende (17) hat, welches dem inneren Hohlraum (2) des Artikels (A) von der dem Ringeinsetzwerkzeug (18) gegenüber liegenden Seite zugewandt ist, und
ein Federmittel, um den Stempel (14) in eine Ruheposition in Richtung des Artikels (A) vorzuspannen, wobei das vordere Ende (17) des Stempels (14) in den inneren Hohlraum des Artikels (A) in der oben genannten Ruheposition derart vorragt, dass der Stempel (14) dazu neigt, der Bewegung des elastischen Rings (R1), welche von dem Ringeinsetzwerkzeug (18) während des Werkzeugeinsetzhubs verursacht wird, entgegen zu wirken, und er den elastischen Ring (R1) in seine korrekte Position zurück bringt, wenn er über die jeweilige Nut(G1) während des Werkzeugeinsetzhubs hinaus geht, aufweist.

2. Vorrichtung gemäß Anspruch 1, **dadurch gekennzeichnet, dass** die verformbaren Lamellen (22) mit äußeren Vorsprüngen (23), welche eine vordere umlaufende Widerlagerfläche (24) bilden, versehen sind, um den elastischen Ring (R1) axial in Position innerhalb der Nut (G1) zu schieben.

3. Vorrichtung gemäß Anspruch 1, **dadurch gekennzeichnet, dass** sie dafür ausgelegt ist, gleichzeitig einen inneren elastischen Ring (R1) in den inneren Hohlraum (2) eines Artikels (A) und einen äußeren elastischen Ring (R2) in einer Nut (G2) an der äußeren Oberfläche (3) des Artikels (A) einzusetzen, und dass das Führungselement (10) außerdem mit einer äußeren konischen Oberfläche (25) versehen ist, die ein Ende mit einem größeren Durchmesser nahe zu dem Artikel aufweist, und dass das Ringeinsetzwerkzeug (18) mit einem äußeren koaxialen röhrenförmigen Körper (26) versehen ist, welcher eine Anzahl von axialen Schlitzen aufweist, die eine umlaufende Anordnung von verformbaren Lamellen (27) besitzen, um einen zuvor auf der konischen Oberfläche (25) des Führungselementes (12) angeordneten äußeren Rings (R2) zu umfassen.

## Revendications

1. Dispositif d'ajustement d'une bague élastique destiné à ajuster une bague élastique à l'intérieur d'une rainure circonférentielle (G1) dans la surface de la cavité intérieure (2) d'un objet creux (A), comprenant :
un support (10) pour ledit objet creux (A),
un élément de guidage (12) à installer sur ledit objet creux (A), une fois que cet objet a été placé sur ledit support (10), ledit élément de guidage (12) comportant une surface de guidage interne (13) s'amincissant vers la cavité interne (2) dudit objet (A) à l'état installé mentionné ci-dessus dudit élément de guidage (12) et dudit objet (A) sur ledit support (10),
un outil d'insertion de bague (18) installé de façon à pouvoir coulisser axialement à travers ladite surface de guidage interne (13) vers l'objet (A) pour pousser une bague élastique (R1, R2) agencée au préalable à l'intérieur de ladite surface de guidage (13) vers une rainure de réception (G1) dans la surface de la cavité interne dudit objet (A),
dans lequel ledit outil d'insertion de bague (18) comprend un corps tubulaire (20) avec un certain nombre de fentes axiales (21) s'étendant à partir d'une extrémité avant dudit corps (20) pour définir un ensemble circonférentiel de lames axiales pouvant s'écarter (22),
**caractérisé en ce que** ledit dispositif d'ajustement d'une bague élastique comprend en outre un plongeur (14) installé de façon à pouvoir coulisser axialement à l'intérieur d'une cavité cylindrique (11) dudit support (10) et ayant une extrémité avant (17) faisant face à la cavité interne (2) de l'objet (A) depuis le côté opposé à celui de l'outil d'insertion de bague (18), et
des moyens de ressort pour solliciter ledit plongeur (14) vers une position de repos en direction dudit objet (A), ladite extrémité avant (17) du plongeur (14) faisant saillie à l'intérieur de la cavité interne dudit objet (A) dans la position de repose mentionnée ci-dessus de sorte que ledit plongeur (14) a tendance à s'opposer au mouvement de ladite bague élastique (R1), provoqué par ledit outil d'insertion de bague (18) pendant la course d'insertion d'outil et ramène la bague élastique (R1) à sa position correcte dans le cas où elle dépasse la rainure respective (G1) pendant ladite course d'insertion d'outil.

2. Dispositif selon la revendication 1, **caractérisé en ce que** lesdites lames pouvant s'écarter (22) sont munies de saillies externes (23) définissant une surface de butée circonférentielle avant (24) pour pousser ladite bague élastique (R1) axialement en position à l'intérieur de ladite rainure (G1).

3. Dispositif selon la revendication 1, **caractérisé en ce qu'**il est conçu pour ajuster simultanément une bague élastique interne (R1) sur la cavité interne (2) d'un objet (A) et une bague élastique externe (R2) dans une rainure (G2) sur la surface externe (3) dudit objet (A), **en ce que** ledit élément de guidage (10) est également muni d'une surface conique externe (25) ayant une extrémité de diamètre supérieur proche dudit objet, et **en ce que** ledit outil d'insertion de bague (18) est muni d'un corps tubulaire coaxial externe (26) ayant un certain nombre de fentes axiales définissant un ensemble circonférentiel de lames pouvant s'écarter (27) pour une mise en prise sur une bague externe (R2) agencée au préalable sur ladite surface conique externe (25) dudit élément de guidage (12).
